# EUROPEAN PATENT APPLICATION

(11) **EP 2 095 722 A1**
(43) Date of publication of application: **02.09.2009**
(21) Application number: 07859747.3
(22) Date of filing: 07.12.2007
(51) Int. Cl.: A23K 1/10, A23K 1/18

(54) **FEED USING PEELED KRILL AS THE STARTING MATERIAL AND METHOD OF PREVENTING DECREASE IN FISH GROWTH RATE BY USING THE SAME**

(30) Priority: 11.12.2006 JP 2006333329
(71) Applicant: NIPPON SUISAN KAISHA, LTD., Tokyo 100-8686 (JP)
(72) Inventor: YOSHITOMI, Bunji, Hachioji-shi Tokyo 192-0906 (JP)
(74) Representative: HOFFMANN EITLE
(86) International application number: PCT/JP2007/073669
(87) International publication number: WO 2008/072563

(57) **Abstract**

A feed which uses krill as all or part of a protein source of the feed, in which shell-removed krill are used as the krill. Fluorine content is reduced to 250 mg/kg dry weight or less by the removal of shells is preferable. A method for minimizing decrease of growth rate of fishes caused by the use of krill as raw material of a feed, in which shell-removed krill are used as a protein source of a feed for fish culture.

## Description

### Technical Field

The present invention relates to a substitute for fish meal as protein raw material of a feed.

### Background of the Invention

According to the Food and Agriculture Organization, production of carnivorous cultured fishes in the world was increased largely in 1990's, and it is estimated that this growth continues hereafter. The feed used in the aquaculture industry generally uses fish meal and fish oil obtained from mass-caught pelagic fish species such as sardine, anchovy, horse mackerel and common horse mackerel as the main raw material. However, these resources have been fully used and a possibility of increasing their production is less. It gives a driving force to the studies on the substitutes for aquatic raw material of feed for fishes. Alternatives to fish meal can be of vegetable origin, as they are often cheaper and more available than marine proteins, but their usage is limited since essential amino acids and minerals are insufficient and anti-nutritional factors, carbohydrate complexes are present and the like. Although animal-derived protein such as meat meal, bone meal, blood meal and feather meal has been used as a partial substitute for fish meal, its application to feed for fish culture was restricted due to bovine spongiform encephalopathy and avian influenza. As a result, there is no an animal protein to be used as a substitute for fish meal at present.

There are aquatic resources which have been unused or used but in a small quantity and also have a large amount of biomass. Krill are one of the most useful resources among them. The krill is a term generally used for "euphausiids". In the world, about 85 species of krill have been reported. Particularly, an antarctic krill (*Euphausia superba*) is an important species in the Southern Ocean ecosystem. This is because krill are the main food for many superior predators such as whales, seals and seabirds and the main consumer of plant plankton. Krill have been commercially caught since in and after 1960's, and are now the object of active catching by several countries. It is estimated that current resource of *Euphausia superba* is five hundred million tons. The catches from December 2004 to November 2005 were about 127,000 tons. The catch restrictions for *Euphausia superba* set by the Convention on the Conservation of Antarctic Marine Living Resources are estimated from the biomass by sonic survey. The catch restrictions in the South Atlantic Ocean are four million tons in 2000 which are about 40 times of the actual catches.

Despite of the presence of a large quantity of biomass, the current catches of krill in the world are limited because of the absence of demand. Among the krill products, krill frozen on the ship is overwhelmingly included therein, and most of them are used in aquaculture or for fishing. Regarding krill, particularly *Euphausia superba,* although fair efforts have been made on the development of products suited for human food, the market size for human food is still small.

Aptitude of krill as raw material of a feed became a subject matter of some papers in 1980's, and it was concluded that krill can be used in feed for fishes (Non-patent References 1 to 3). However, the studies were not continued thereafter. One of the reasons thereof is that the fluorine content of krill is high (1,000 to 2,500 mg/kg in the case of *Euphausia superba*) and that EU defined maximum amount of fluorine in feed as 150 mg/kg dry feed.

It has been reported that larvae of a fish: Barramundi (*Lates calcarifer*) which was fed with a test sample containing krill meal showed reduction of growth and reduction of thyroid hormone (T4) (Non-patent Reference 4). A test in which part or all of fish meal as raw material of feed for salmon family fishes was replaced by krill meal was reported (Non-patent Reference 3). In many cases, growth rate and feed efficiency are reduced when all of the fish meal in feed is replaced by krill and equivalent or superior results are obtained when part of fish meal is replaced by krill (Non-patent Reference 5). Substitution of entire amount of fish meal in feed with krill is not carried out.

Julshamn *et al*. (Non-patent Reference 6) have carried out a test in which an Atlantic salmon (Salmo salar) in sea water was fed with the feed in which 10 to 30% of fish meal of a commercially available fish meal feed was substituted with krill meal for 12 weeks and reported that the salmon feed does not exert influence on growth and survival rate even when up to 48% of fish meal is substituted with krill meal.

It is known that fluorine of krill is present in their shells at a high concentration (Non-patent Reference 7).
Non-Patent Reference 1: Aquaculture 24, p191-196 (1981), Grave, H., "Fluoride content of salmonids fed on Antarctic krill."
Non-Patent Reference 2: Diet. Bull. Japan Soc. Sci. Fish 50, p815-820 (1984), Allahpichay, I and Shimizu, C., "Supplemental effect of the whole body krill meal and the non-muscle krill meal of Euphausia superba in fish diet."
Non-Patent Reference 3: Aquaculture 70, p193-205 (1988), Storebakken, T., "Krill as a potential feed source for Salmonids."
Non-Patent Reference 4: Aquaculture 257, p453-464 (2006), Nankervis, L. and Southgate, P., "An integrated assessment of gross marine protein sources used in formulated microbound diets for barramandi (Lates calcarifer) larvae."
Non-Patent Reference 5: Proc. World Symp. Finfish Nutrition and Fishfeed Technology. Hamburg, 20-23 June 1978. Vol. II. Heenemann, Berlin, p281-292 (1979), Koops et al., "Krill in trout diets."
Non-Patent Reference 6: Aquaculture Nutr. 10, p9-13 (2004), Julshamn, K. et al., "Fluoride retention of Antarctic salmon (Salmo salar) fed krill meal."
Non-Patent Reference 7: J. Fish. Res. Bd. Can. 36, p1414-1416 (1979), Soevik, T. and Braekkan, O. R., "Fluoride in Antarctic krill (Euphausia superba) and Atlantic krill (Meganocytiphanes norvegica)."

### Disclosure of the invention

### Problems to be solved by the Invention

The present invention aims at providing a substitute for fish meal which is the protein source of a feed for fish culture and whose shortage in the future is expected. It also aims at enabling practical use of krill as raw material of a feed, whose use as raw material of a feed has been limited.

### Means for Solving the Problems

It is known that growth rate of fishes is reduced when krill are used in a feed for fishes at a certain ratio or more. The inventors of the present invention have accomplished the invention by considering that the cause of it is the high fluorine content of krill. Application of krill to feed has been restricted by taking influence on human into consideration due to the high fluorine content of krill. Thus, no one has attempted to use certain amount or more of krill as raw material of a feed. However, by confirming that the fluorine content of krill can be reduced to 1/4 or less when their shells having the highest fluorine content in krill are removed and by carrying out a feeding test by adding the resulting product to a feed, it was confirmed that the use of krill as 100% protein of raw material of the feed does not exert a bad influence on the growth rate of fishes. Thus, the present invention is accomplished.

The following feeds described in (1) to (6) are summary of the present invention.
(1) A feed which uses krill as all or part of a protein source of the feed, in which shell-removed krill are used as the krill.
(2) The feed according to (1), in which all or part of fish meal as a protein source of the feed is replaced by the krill and the shell-removed krill are used as the krill.
(3) The feed according to (1) or (2), in which the shell-removed krill are obtained by drying the krill with heating, cutting the resulting dry product of the krill and removing a light weight fraction such as the shell using an air classifier.
(4) The feed according to any one of (1) to (3), in which the shell removed krill is the krill whose fluorine content is reduced to 250 mg/kg dry weight or less by the removal of shells.
(5) The feed according to any one of (1) to (4), in which the shell-removed krill are used in an amount of 50% by weight or more based on the protein source of the feed.
(6) The feed according to any one of (1) to (5), in which the feed is a feed for fish culture.
   The following methods for minimizing decrease of growth rate of fishes by the addition of krill described in (7) to (11) are summary of the present invention.
(7) A method for minimizing decrease of growth rate of fishes caused by the use of krill as raw material of a feed, in which shell-removed krill are used as a protein source of a feed for fish culture.
(8) The method for minimizing decrease of growth rate of fishes caused by the use of the krill as the raw material of the feed according to (7), in which the shell-removed krill are used as a substitute for fish meal.
(9) The method for minimizing decrease of growth rate of fishes caused by the use of the krill as the raw material of the feed according to (7) or (8), in which the shell-removed krill are obtained by drying the krill with heating, cutting the resulting dry product of the krill and removing a light weight fraction such as the shell using an air classifier.
(10)The method for minimizing decrease of growth rate of fishes caused by the use of the krill as the raw material of the feed according to any one of (7) to (9), in which the shell removed krill is the krill whose fluorine content is reduced to 250 mg/kg dry weight or less by the removal of shells.
(11) The method for minimizing decrease of growth rate of fishes caused by the use of the krill as the raw material of the feed according to any one of (7) to (10), in which the shell-removed krill are used in an amount of 50% by weight or more based on the protein source of the feed.

### Effect of the Invention

The feed of the present invention can be used as a protein source of feed without exerting a bad influence by fluorine. In the case of its use as a feed for fish culture, it can be used in the same manner as a feed for fish culture which uses fish meal as the raw material, without exerting a bad influence upon the growth of fishes. The krill which were able to be used conventionally only as a partial substitute for fish meal can be used at a high ratio or as a whole substitute.

### Best Mode for Carrying Out the Invention

The feeds according to the invention are feeds for fish culture, livestock farming, poultry farming, pets and the like, which mainly use fish meal. In general, these feeds are made into products such as pellets, granules and powders by adding cereals, chaff and bran, plant oil cakes, plant proteins, vitamins, minerals, and further pigments and the like to raw material of animal feed such as fish meal. The present invention is particularly suited for the feeds of fish culture for cultured fish and crustaceans, which use fish meal in a large amount. Examples of the cultured fish and crustaceans include fishes of Sparidae family such as a red sea bream, fishes of salmonidae family such as a rainbow trout, a salmon and a trout, fishes to be cultured such as a yellowtail, a yellow jack, a flounder, an eel and a shrimp.

As the krill to be used in the present invention, although *Euphausia superba* which is rich in resources is preferable, other krills can also be used in the same manner.

Conventionally, whole krill including their shells are boiled and dried are used by calling them as krill meal.

According to the present invention, the shell-removed krill are krill from which their antenna, maxilliped, leg, head shell, body shell and tail shell parts are removed. Although 100% removal is the best, those from which about 75% or more of them are removed can be substantially used. When it is described by the fluorine content, those in which the fluorine content is reduced to 250 mg/kg or less by the removal of shells are preferable. Even in the general fish meal, fluorine is contained at a fluorine content of about 100 to 200 mg/kg.

Regarding the method for removing shells, krill are dried to have a moisture content of 15% or less after their heating by boiling, steaming, dielectric heating, microwave or the like method, or directly without carrying out heating. Although examples of the drying method include hot air drying and freeze-dry lyophilization, any method can be used. The thus obtained dry krill are cut into pieces of about 5 mm and applied to an air classifier to classify them into a light weight fraction consisting of shells and the like and a heavy weight fraction mainly consisting of krill muscles and the like. A shell-removed krill fraction can be obtained with removing shell in the heavy weight fraction. Alternatively, shells of krill can also be removed by a roller type stripper and the like (JP-B-57-1207, JP-B-7-40868 and the like).

The use of krill as all or part of the protein source means that all or part of the total weight of animal proteins such as fish meal or plant proteins such as soybean cake, which are generally used as raw material of feed, is substituted with krill. The use of a shell-removed krill in an amount of 30% by weight or more of the protein source of feed means that 30% by weight or more of the total weight of these proteins is substituted with the shell-removed krill.

Although the following describes examples of the invention, the invention is not limited thereto.

### Examples

### Production Example 1 Production of shell-removed krill meal (to be referred also to as low fluorine krill meal or LFK hereinafter)

Frozen raw *Euphausia superba* (mfd. by NIPPON SUISAN KAISHA, LTD.) were defrosted at room temperature and boiled at 95°C for 10 minutes, followed by drying at 120°C (hot air temperature) using a continuous belt type drier (DC-200, Samson Co., Ltd., Kagawa, Japan) until moisture content of the krill became 10% or less. The whole dried krill were pulverized using a hammer mill (D-3, Dalton Co., Ltd., Tokyo, Japan) and a 5 mm sieve. The pulverized krill were applied to an air classifier (VS10, Hattori Seisakusho Co., Ltd., Kyoto, Japan) and separated into low fluorine krill meal (LFK) and shells.

Compositions of the whole dried krill, LFK and shells are shown in Table 1. Crude protein of the whole dried krill was 66.04%, while that of LFK was increased to 76.76%. Namely, about 10% increased by the removal of shells. Crude protein of the removed shells was 56.74%. Crude fat, ash content and astaxanthin of LFK were lower than those of the whole dried krill and removed shells. This is because the astaxanthin-containing fat tissues of krill were firmly adhered to the shells.

The fluorine content of LFK was 210 mg/kg which is about 1/4 when it is compared with the 870 mg/kg of the whole dried krill. In the removed shells, 1,800 mg/kg portion of fluorine was contained. Fatty acid compositions of the whole dried krill, LFK and removed shells were almost the same. Among the lipid components, triacylglycerol was 20.6% in LFK and 26.2% in the whole dried krill. Namely it is lower in LFK. Phospholipid was 77.3% in LFK, while 72.0% in the whole dried krill. Namely, it is higher in LFK.

**Table 1**

| Comparison of krill meal and low fluorine krill meal (dry product base (% by weight)) | | | |
|---|---|---|---|
| | Whole dried krill | Low fluorine krill meal | Removed shells |
| Crude protein | 66.04 | 76.76 | 56.74 |
| Crude fat | 19.87 | 13.27 | 21.51 |
| Crude fiber | 2.44 | 0.11 | 4.46 |
| Ash content | 11.65 | 9.18 | 14.83 |
| Nitrogen-free extract | 0 | 0.79 | 2.45 |
| Astaxanthin (mg/kg) | 90 | 38 | 96 |
| Fluorine (mg/kg) | 870 | 210 | 1800 |

| Fatty acid composition | | | |
|---|---|---|---|
| 14:00 | 11.33 | 10.81 | 11.45 |
| 16:00 | 21.67 | 22.11 | 21.82 |
| 16:1n-7 | 8.07 | 7.73 | 7.78 |
| 18:1n-9 | 19.1 | 19.28 | 19.33 |
| 18:2n-6 | 1.39 | 1.48 | 1.5 |
| 18:3n-3 | 0.71 | 0.77 | 0.75 |
| 18:4n-3 | 2.38 | 2.24 | 2.54 |
| 20:1n-9 | 1.04 | 1 | 1.04 |
| 20:4n-3 | 0.36 | 0.37 | 0.36 |
| 20:4n-6 | 0.29 | 0.3 | 0.31 |
| 20:5n-3 | 14.21 | 14.31 | 13.55 |
| 22:5n-3 | 0.37 | 0.37 | 0.36 |
| 22:6n-3 | 7.12 | 8.11 | 6.87 |

| Lipid classification | | | |
|---|---|---|---|
| Hydrocarbon | 0 | 0 | 0 |
| Wax ester | trace | trace | trace |
| Triacylglycerol | 26.2 | 20.6 | 26.1 |
| Free fatty acid | 1 | 1.4 | 1.3 |
| Sterol | 0.8 | 0.7 | 0.8 |
| Phospholipid | 72 | 77.3 | 71.8 |

### Example 1 Production of feeds using low fluorine krill meal (LFK)

Test feeds were produced based on the mixture shown in Table 2. Compositions of respective feeds are shown in Table 2. Using a twin screw extruder (α-50, Suehiro EPM Corporation, Mie, Japan), five types of feeds in which certain amounts of fish meal were substituted with LFK and a feed in which 100% fish meal was used as a control were produced. Brown fish meal was used as the main protein source of the feed, and the mixture was arranged by substituting 7.69% (LFK 7), 15.39% (LFK 15), 30.77% (LFK 30), 46.16% (LFK 46) or 100.00% (LFK 100) of the fish meal with LFK. When the ratio of substitution of fish meal with LFK was increased, crude protein in the feed was increased from 52.05% (Control) to 54.18% (LFK 100) and the amount of fluorine was increased from 89 mg/kg (Control) to 220 mg/kg (LFK 100). However, the ash content was reduced from 12.38% (Control) to 8.24% (LFK 100). Purified fish oil (mfd. by NIPPON SUISAN KAISHA LTD.) was added as the main lipid source. Crude fat of the feeds was from 16.51 % to 17.21 %.

The essential amino acid content of the test feeds is shown in Table 3. When the substitution ratio in the feeds by LFK was increased, all amino acid other than histidine were increased.

Fatty acid composition of each feed and lipid classification are shown in Table 4. The n-3 highly unsaturated fatty acids were from 26.13% to 30.45% among total fatty acids. Accompanied by the increase of the ratio of LFK in each feed, eicosapentaenoic acid (EPA; 20:5n-3) was increased from 8.92% of Control to 12.42% of LFK 100, and docosahexaenoic acid (DHA; 22:6n-3) was reduced from 13.84% of Control to 10.56% of LFK 100. In lipid classification in feeds, when ratio of substitution of fish meal in feeds with LFK is increase, triacylglycerol was reduced from 70.9% of Control to 42.0% of LFK 100, and phospholipid was increased from 27.9% of Control to 56.8% of LFK 100.

**Table 2**

| Mixture and chemical compositions of test feeds (dry product base (% by weight)) | | | | | | |
|---|---|---|---|---|---|---|
| Feeds | | | | | | |
| | Control | LFK 7 | LFK 15 | LFK 30 | LFK 46 | LFK 100 |
| Brown fish meal | 57.98 | 53.52 | 49.06 | 40.14 | 31.22 | 0 |
| Low fluorine krill meal (LFK) | 0 | 4.46 | 8.92 | 17.84 | 26.76 | 57.98 |
| Wheat flour (off grade) | 11.6 | 11.6 | 11.6 | 11.6 | 11.6 | 11.6 |
| Defatted soybean meal | 8.92 | 8.92 | 8.92 | 8.92 | 8.92 | 8.92 |
| Cassava starch | 7.14 | 7.14 | 7.14 | 7.14 | 7.14 | 7.14 |
| Vitamin premix | 1.83 | 1.83 | 1.83 | 1.83 | 1.83 | 1.83 |
| Mineral premix | 1.83 | 1.83 | 1.83 | 1.83 | 1.83 | 1.83 |
| Fish oil for feed | 10.7 | 10.7 | 10.7 | 10.7 | 10.7 | 10.7 |
| Total | 100 | 100 | 100 | 100 | 100 | 100 |
| Substitution ratio (%) of fish | 0 | 7.69 | 15.39 | 30.77 | 46.16 | 100 |
| meal by LFK | | | | | | |
| Crude protein | 52.05 | 52.56 | 52.32 | 52.59 | 53.06 | 54.18 |
| Crude fat | 17.21 | 16.51 | 16.98 | 17.14 | 17.19 | 17.02 |
| Crude fiber | 0.42 | 0.63 | 0.63 | 0.53 | 0.53 | 0.64 |
| Ash content | 12.38 | 12.23 | 11.81 | 11.22 | 10.55 | 8.24 |
| Nitrogen-free extract | 17.94 | 18.08 | 18.35 | 18.62 | 18.67 | 19.91 |
| Astaxanthin (mg/kg) | ND | 3.2 | 5.5 | 7.5 | 7.6 | 8.6 |
| Fluorine (mg/kg) | 89 | 100 | 110 | 130 | 150 | 220 |

| | | | | | | |
|---|---|---|---|---|---|---|
| Vitamin premix and mineral premix: according to National Research Council (NRC, 1993) recommendations ND: not detectable (detection limit 0.5 mg/kg) | | | | | | |

**Table 3**

| Essential amino acid content of test feeds (g/100 g diet, wet basis) | | | | | | |
|---|---|---|---|---|---|---|
| | Diets | | | | | |
| | Control | LFK 7 | LFK 15 | LFK 30 | LFK 46 | LFK 100 |
| Arginine | 2.774 | 2.843 | 2.945 | 2.922 | 2.925 | 3.231 |
| Histidine | 1.308 | 1.279 | 1.279 | 1.101 | 1.133 | 1.013 |
| Isoleucine | 2.058 | 2.083 | 2.19 | 2.2 | 2.181 | 2.461 |
| Leucine | 3.426 | 3.489 | 3.659 | 3.588 | 3.593 | 3.901 |
| Lysine | 3.449 | 3.501 | 3.663 | 3.642 | 3.565 | 3.963 |
| Methionine | 1.081 | 1.094 | 1.169 | 1.146 | 1.146 | 1.337 |
| Cystine | 0.218 | 0.25 | 0.257 | 0.244 | 0.261 | 0.236 |
| Phenylalanine | 1.919 | 1.963 | 2.068 | 2.069 | 2.051 | 2.306 |
| Tyrosine | 1.284 | 1.33 | 1.414 | 1.444 | 1.429 | 1.584 |
| Threonine | 1.783 | 1.801 | 1.876 | 1.793 | 1.816 | 1.849 |
| Valine | 2.359 | 2.34 | 2.45 | 2.347 | 2.377 | 2.431 |

**Table 4**

| Fatty acid composition of test feeds (% by weight in total fatty acids) and lipid classification (% by weight in total lipids) | | | | | | |
|---|---|---|---|---|---|---|
| | Diets | | | | | |
| | Control | LFK 7 | LFK 15 | LFK 30 | LFK 40 | LFK 100 |
| 14:00 | 4.75 | 5 | 4.51 | 5.83 | 5.14 | 6.69 |
| 16:00 | 14.41 | 15.01 | 12.63 | 16.36 | 13.3 | 15.06 |
| 16:1n-7 | 5.51 | 5.55 | 6.09 | 6.19 | 6.36 | 7.66 |
| 18:1n-9 | 15.59 | 15.73 | 16.48 | 17.37 | 16.55 | 19.85 |
| 18:2n-6 | 4.55 | 4.44 | 4.67 | 4.59 | 5.05 | 5.04 |
| 18:3n-3 | 1.16 | 1.14 | 1.24 | 1.11 | 1.3 | 1.2 |
| 18:4n-3 | 1.89 | 1.86 | 2.13 | 2.02 | 2.32 | 2.22 |
| 20:1n-9 | 6.34 | 6.13 | 5.93 | 5.92 | 4.76 | 3.53 |
| 20:4n-3 | 0.68 | 0.66 | 0.73 | 0.66 | 0.7 | 0.54 |
| 20:4n-6 | 0.95 | 0.92 | 0.99 | 0.88 | 0.91 | 0.63 |
| 20:5n-3 (EPA) | 8.92 | 9.08 | 10.39 | 10.25 | 12.08 | 12.42 |
| 22:5n-3 | 1.6 | 1.54 | 1.67 | 1.47 | 1.51 | 1 |
| 22:6n-3 (DHA) | 13.84 | 13.39 | 14.43 | 13.2 | 14.05 | 10.56 |
| Hydrocarbon | 0 | 0 | 0 | 0 | 0 | 0 |
| Wax ester | trace | trace | trace | trace | trace | trace |
| Triacylglycerol | 70.9 | 67.1 | 62.5 | 60.5 | 60.3 | 42 |
| Free fatty acid | 0.7 | 0.8 | 1.1 | 1.2 | 1 | 1.2 |
| Sterol | 0.5 | 0 | 0 | 0 | 0.7 | 0 |
| Phospholipid | 27.9 | 32.1 | 36.4 | 38.3 | 38 | 56.8 |

### Example 2

### 1. Test method

A feeding test was carried out for 95 days at a fresh water test facility of Faculty of Agriculture, Kochi University. As the test fish, a rainbow trout obtained from Fujioka Trout Farm, Ehime, was used. Before commencement of the test, the fishes were fed with a commercially available feed (initial stage feed D-2, mfd. by NIPPON SUISAN KAISHA LTD.) and divided at random into 6 groups of 2×100 fishes per group. The fish of each group was about 4.1 g. All groups were kept in an indoor 200 liter capacity circular polycarbonate water tanks, and well water was poured into each water tank at a rate of 100 L/h. Mean water temperature during the test period was 18.4 ± 0.3°C, and all of the tanks were aerated. The duration of sunshine during the test period (October, 2005 to January, 2006) was as the natural condition at the spot (33° 34' N, 133° 39' E).

The 6 kinds of feeds produced in Example 1 were used as the test feeds. The test feeds were satiation-fed by a hand twice a day (9 o'clock and 15 o'clock), and the feed consumption was recorded every day.

Body weight of all fishes of each group was measured under phenoxyethanol anesthesia at the time of the commencement of the test and on the 36th, 64th and 95th days after commencement of the feeding. The fishes were subjected to fasting for 24 hours before the sampling. At the time of the completion of the test, 15 fishes were sampled at random from each water tank. Their body weights and weights of the extracted livers were measured to calculate Hepatosomatic index (HSI), and paraffin sections of the livers were prepared. Using the muscles of skin-removed dorsal region and vertebral bones, analyses of their chemical compositions and fluorine were carried out. The vertebral bones were boiled at 95°C for 60 minutes and then stirred overnight at room temperature in 0.1% in concentration of an alkalase 2.4L FG (Novozymes A/S, Bagsvaerd, Denmark). The bones were washed with distilled water and dried at 85°C for 3 hours. Until subjecting to the analysis, all samples were preserved at -25°C.

### 2. Analytical method

The analyses were carried out at Japan Food Analysis Center or the food analysis center of NIPPON SUISAN KAISHA LTD. The moisture content was calculated from the decrease in weight after 2 hours of drying at 105°C. The crude protein content was measured by the Kjeldahl method (nitrogen coefficient 6.25). The crude fat content was measured by a weight measuring method after extraction with diethyl ether. The ash content was measured after burning at 550°C. The soluble non-nitrogen substance was calculated by the following formula: total wet weight - (moisture content + crude protein content + crude fat content + crude fiber + ash content). Fluorine was color-developed with Alizarin Complexon-lanthanum reagent and the absorbance was measured at a wavelength of 620 nm.

The amino acid composition was measured by the ninhydrin reaction as the general method which uses a high performance liquid chromatography and an amino acid analyzer (L-8500, Hitachi High-Technologies Corporation). Tryptophan was not measured.

The total lipid was extracted by the Bligh and Dyer's modified method (Bligh and Dyer, 1959). The fatty acid composition was measured using a gas chromatography equipped with DB-WAX fused silica capillary column (HP-6800, Hewlett-Packard, Yokogawa Electric, Tokyo, Japan). Composition of the total lipid was analyzed using a thin layer chromatography and a hydrogen ionization detector (Iatroscan TH-10 TLC-FLD Analyzer, Iatron Laboratories Inc., Tokyo, Japan).

At the end of the test, 15 fishes were sampled at random from each group, and a tissue specimen of the liver was cut out. It was fixed with neutral 10% formalin and paraffin-embedded. It was made into a 4 µm section and stained with hematoxylin and eosin.

### 3. Statistical analysis

It was confirmed by the Pearson's χ² test that fish body weights of each water tank are normally distributed. In order to test difference in the fish body weight of each water tank, one-way layout analysis of variance (ANOVA) was carried out. When differences among groups were compared, the data were tested using a multiple comparison test (Scheffe's sF) which uses overlapped water tanks as an accidental element. Difference in fed amount (FI), specific growth rate (SGR), feed effect (FE) and hepatosomatic index (HSI) were tested using one-way layout analysis of variance. The survival rates were compared using Logrank test. A correlation line of the fluorine intake of each fish and fluorine concentration in its vertebral bone was drawn using Microsoft Excel (Microsoft Cooperation, Redmond, WA). All of the statistical data treatments were carried out using Macintosh Statcel^{™} (OMS-Publishing, Saitama, Japan). P < 0.05 was regarded as significant difference.

### 4. Results

### (1) Growth

Growth of fishes which ingested the six test feeds is shown in Table 5. Although body weight of each group was measured on the 0th, 36th, 64th and 95th day, significant difference from the mean body weight was not found at every intermediate point (p < 0.05). Remarkable difference in the growth was not found also on the 95th day in FI, SGR, FE, HIS and survival rate of the each test groups (p < 0.05). Table 6 shows chemical composition of dorsal muscle on the 95th day. Remarkable difference was not found between the control group and each test group also in the moisture content (75.5 to 76.0%), crude protein (20.1 to 20.9%), crude fat (2.5 to 2.9%) and ash content (1.4 to 2.1 %).

**Table 5**

| Test feeds | | | | | | |
|---|---|---|---|---|---|---|
| | Control | LFK 7 | LFK 15 | LFK 30 | LFK 46 | LFK 100 |
| Body weight before test (g) | 4.19 ± 1.37^{a} | 4.00 ± 1.27^{a} | 4.20 ± 1.44^{a} | 4.04 ± 1.25^{a} | 4.26 ± 1.24^{a} | 4.10 ± 1.23^{a} |
| Body weight on the 36th day (g) | 18.35 ± 6.72^{a} | 17.98 ± 6.36^{a} | 17.83 ± 6.30^{a} | 17.94 ± 5.74^{a} | 18.86 ± 6.14^{a} | 17.27 ± 5.74^{a} |
| Body weight on the 64th day (g) | 39.97 ± 13.86^{a} | 41.10 ± 13.68^{a} | 41.34 ± 14.37^{a} | 40.01 ±12.42^{a} | 41.95± 13.53^{a} | 39.17 ±12.20^{a} |
| Final body weight on the 95th day (g) | 73.94 ±22.49^{a} | 72.75 ±21.21^{a} | 72.64 ±25.37^{a} | 72.79 ±20.83^{a} | 73.31 ±22.76^{a} | 72.90 ±20.31^{a} |
| Feed intake (FI) (g/fish) | 64.35 ± 0.60^{a} | 62.9 ± 1.01^{a} | 62.77 ± 1.43^{a} | 64.50 ± 3.88^{a} | 61.10 ± 1.58^{a} | 64.35 ± 0.06^{a} |
| Specific growth ratio (SGR) (%) | 3.06 ± 0.06^{a} | 3.01 ± 0.06^{a} | 2.99 ± 0.01^{a} | 3.06 ± 0.03^{a} | 3.01 ± 0.02^{a} | 3.01 ± 0.00^{a} |
| Feeding efficiency (FE) | 0.87 ± 0.03^{a} | 0.87 ± 0.02^{a} | 0.87 ± 0.02^{a} | 0.86 ± 0.03^{a} | 0.88 ± 0.02^{a} | 0.86 ± 0.01^{a} |
| Hepatosomatic index (HSI) | 0.90 ± 0.15^{a} | 0.95 ± 0.11^{a} | 0.88 ± 0.13^{a} | 0.87 ± 0.11^{a} | 0.97 ± 0.14^{a} | 0.93 ± 0.10^{a} |
| Survival rate (%) | 98.50 ± 0.71^{a} | 99.50 ± 0.71^{a} | 97.50 ± 0.71^{a} | 98.00 ± 0.00^{a} | 97.00 ± 1.41^{a} | 99.50 ± 0.71^{a} |

| | | | | | | |
|---|---|---|---|---|---|---|
| Feed intake (FI) = dry feed intake/the number of fishes Specific weight gain ratio (SGR) = [In(final fish body weight) - In(fish body weight before test)]/the number of days × 100 Feed efficiency (FE) = Weight gain/Dry feed intake Hepatosomatic index (HSI) = wet liver weight/wet body weight × 100 Values are mean value ± standard deviation There is a significant difference between the values to which the same letter was attached in the same line (p < 0.05) | | | | | | |

### (2) Fluorine concentration

Fluorine concentration in the dorsal muscle and vertebral bone on the 95th day was analyzed (Table 6). Fluorine concentration in the dorsal muscle of the test groups excluding the LFK 100 group was detection limit (1 mg/kg) or less, and fluorine concentration in the vertebral bone of the test groups excluding the LFK 100 group was from 340 mg/kg to 420 mg/kg. Fluorine concentrations in the dorsal muscle and vertebral bone of the LFK 100 group were 1 mg/kg and 1,800 mg/kg, respectively, and it was 220 mg/kg in the vertebral bone in the control group was 220 mg/kg which was lower than the other groups.

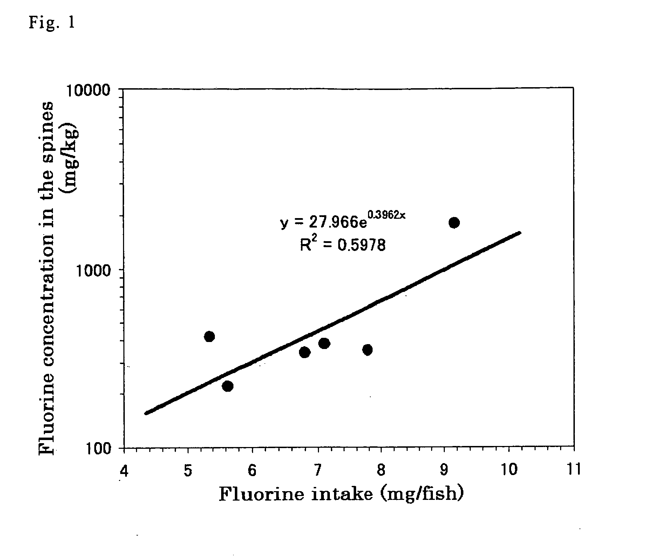

A correlation line of the total fluorine intake and fluorine concentration in vertebral bone is shown in Fig. 1. The intake and concentration showed positive correlation.

### (3) Histological study

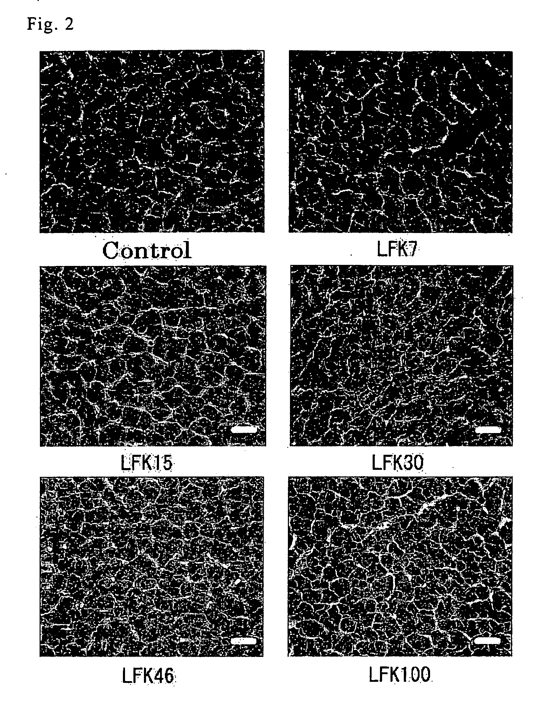

Since the liver tissues were almost the same in the six test groups, histopathological changes were not found (Fig. 2). It indicates that the feed-derived fluorine did not exert influence on the liver tissues.

**Table 6**

| Chemical composition (%) of dorsal muscle and fluorine concentration (mg/kg, dry basis) in dorsal muscle and vertebral bone at the end of the test | | | | | | |
|---|---|---|---|---|---|---|
| | Test feeds | | | | | |
| | Control | LFK 7 | LFK 15 | LFK 30 | LFK 46 | LFK 100 |
| Moisture content | 75.5^{a} | 75.8^{a} | 75.5^{a} | 75.6^{a} | 75.5^{a} | 76.0^{a} |
| Crude protein | 20.4^{a} | 20.6^{a} | 20.6^{a} | 20.9^{a} | 20.8^{a} | 20.1^{a} |
| Crude fat | 2.9^{a} | 2.5^{a} | 2.5^{a} | 2.6^{a} | 2.7^{a} | 2.5^{a} |
| Ash content | 2.1^{a} | 2.1^{a} | 1.7^{a} | 2.0^{a} | 1.9^{a} | 1.4^{a} |
| | Fluorine concentration | | | | | |
| Dorsal muscle | ND | ND | ND | ND | ND | 1 |
| Vertebral bone | 220^{a} | 420^{b} | 340^{b} | 380^{b} | 350^{b} | 1,800^{c} |

| | | | | | | |
|---|---|---|---|---|---|---|
| Values are mean values (n = two dietary groups, each containing pooled sample of 15 individuals) There is a significant difference between the values to which the same letter was attached in the same line (p < 0.05) ND: not detected | | | | | | |

### Comparative Example 1

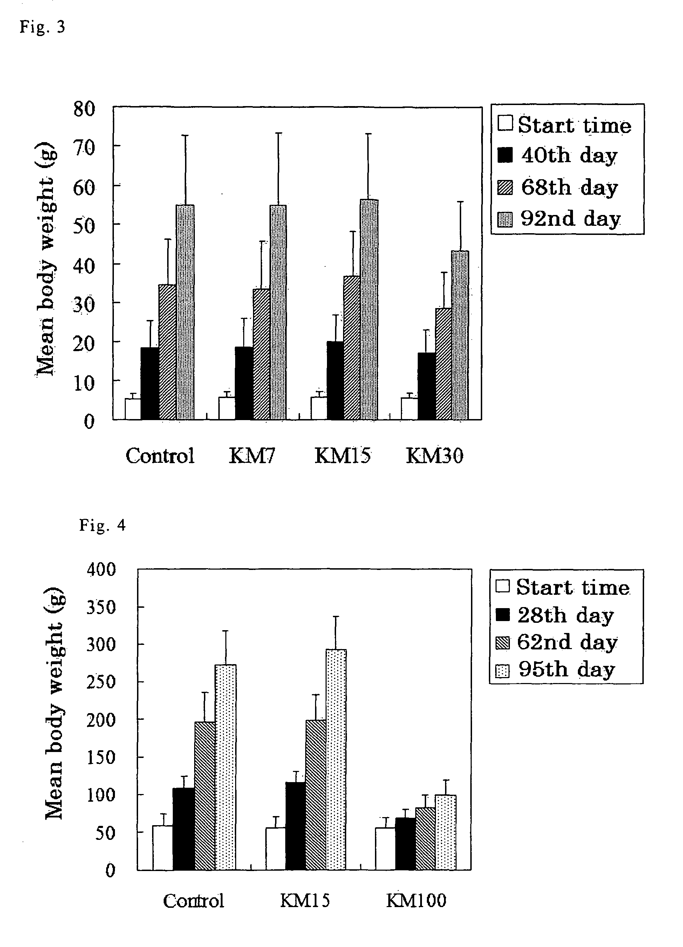

A test was carried out by substituting fish meal of a feed consisting of fish meal as main raw material with 0%, 7%, 15% or 30% krill meal (conventional product containing shells) and feeding rainbow trouts in fresh water with the prepared feed for 92 hours. Fluorine concentrations in the feeds were 105, 184, 238 and 444 mg/kg, respectively. At the time of the completion of the test, fluorine concentration of the dorsal muscle of each test group was detection limit (1 mg/kg) or less, while in the case of vertebral bones, it increased from 490 mg/kg to 2,400 mg/kg according to increase of the added amount of the krill meal and the growth rate (Fig. 3) was reduced.

### Comparative Example 2

A test was carried out by substituting fish meal of a feed consisting of fish meal as main raw material with 0%, 15% or 100% krill meal (conventional product containing shells) and feeding yellowtails in sea water with the prepared feed for 95 hours. In the case of yellowtail, influence upon its growth rate was not found by the 15% substitution, but sharp reduction in the growth rate was observed with the 100%-substituted feed (Fig. 4).

### Example 3

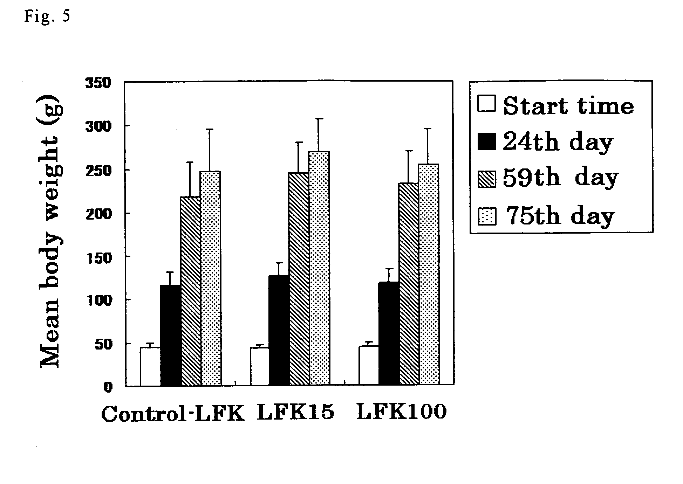

On the other hand, a test was carried out by substituting fish meal of a feed consisting of fish meal as main raw material with 0%, 15% or 100% low fluorine krill meal (LFK) and feeding yellowtails in sea water with the thus prepared feed for 75 hours. As a result, difference in growth was not found in all of the test plots. Therefore, it was found that the low fluorine krill meal (LFK) obtained by removing krill shells and the fish meal have equivalent performance as the raw material of a feed (Fig. 5).

### Industrial Applicability

By the present invention, a new animal protein source which can be used as a substituent protein source of fish meal without limitation can be provided. Although reduction in the growth rate of fishes was conventionally observed when krill meal was added to feed at a certain ratio or more, a method which does not reduce growth rate even when krill were added can be provided by the present invention.

### Brief Description of the Drawings

Fig. 1 shows a relationship between the fluorine intake by fishes and fluorine concentration in vertebral bones of fishes during 95 days of test period. The fluorine intake of fishes was calculated by "feed intake of each fish × fluorine concentration in the feed".
Fig. 2 shows liver sections of rainbow trouts which ingested test samples for 95 days. Signs in the figure are the same as in Table 2. The line segment in the photographs is 20 µm.
Fig. 3 shows growth rate of rainbow trouts in Comparative Example 1.
Fig. 4 shows growth rate of yellowtails in Comparative Example 2.
Fig. 5 is shows growth rate of yellowtails in Inventive Example 3.

## Claims

1. A feed which uses krill as all or part of a protein source of the feed, in which shell-removed krill are used as the krill.

2. The feed according to claim 1, in which all or part of fish meal as a protein source of the feed is replaced by the krill and the shell-removed krill are used as the krill.

3. The feed according to claim 1 or 2, in which the shell-removed krill are obtained by drying the krill with heating, cutting the resulting dry product of the krill and removing a light weight fraction such as the shell using an air classifier.

4. The feed according to any one of claims 1, to 3, in which the shell-removed krill is the krill whose fluorine content is reduced to 250 mg/kg dry weight or less by the removal of shells.

5. The feed according to any one of claims 1 to 4, in which the shell-removed krill are used in an amount of 50% by weight or more based on the protein source of the feed.

6. The feed according to any one of claims 1 to 5, in which the feed is a feed for fish culture.

7. A method for minimizing decrease of growth rate of fishes caused by the use of krill as raw material of a feed, in which shell-removed krill are used as a protein source of a feed for fish culture.

8. The method for minimizing decrease of growth rate of fishes caused by the use of the krill as the raw material of the feed according to claim 7, in which the shell-removed krill are used as a substitute for fish meal.

9. The method for minimizing decrease of growth rate of fishes caused by the use of the krill as the raw material of the feed according to claim 7 or 8, in which the shell-removed krill are obtained by drying the krill with heating, cutting the resulting dry product of the krill and removing a light weight fraction such as the shell using an air classifier.

10. The method for minimizing decrease of growth rate of fishes caused by the use of the krill as the raw material of the feed according to any one of claims 7 to 9, in which the shell-removed krill is the krill whose fluorine content is reduced to 250 mg/kg dry weight or less by the removal of shells.

11. The method for minimizing decrease of growth rate of fishes caused by the use of the krill as the raw material of the feed according to any one of claims 7 to 10, in which the shell-removed krill are used in an amount of 50% by weight or more based on the protein source of the feed.
